# EUROPÄISCHE PATENTSCHRIFT

(11) **EP 2 483 655 B1**
(45) Veröffentlichungstag und Bekanntmachung des Hinweises auf die Patenterteilung: **12.02.2020**
(21) Anmeldenummer: 10766252.0
(22) Anmeldetag: 04.10.2010
(51) Int. Cl.: G01M 1/02, G01M 1/04, G01M 1/34

(54) **SPINDELKLEMMUNG**
SPINDLE CLAMPING
BLOCAGE DE BROCHE

(30) Priorität: 02.10.2009 DE 102009048026
(43) Veröffentlichungstag der Anmeldung: 08.08.2012
(73) Patentinhaber: Franz Haimer Maschinenbau KG, 86568 Hollenbach (DE)
(72) Erfinder: HAIMER, Franz, 86568 Hollenbach (DE)
(74) Vertreter: Misselhorn, Hein-Martin
(86) Internationale Anmeldenummer: PCT/EP2010/064739
(87) Internationale Veröffentlichungsnummer: WO 2011/039375

(56) Entgegenhaltungen:
- EP-A2- 0 754 937
- WO-A1-2004/011896
- US-A- 2 954 711
- US-A- 3 861 817

## Beschreibung

Die Erfindung betrifft eine auch als Auswuchtvorrichtung bezeichnete Wuchtmaschine zur Bestimmung und Beseitigung der Rotationsunwucht eines Prüflings (insbesondere in Gestalt eines Werkzeughalters) mit den Gattungsmerkmalen des Oberbegriffs des Anspruchs 1.

Vorrichtungen, mit denen sich das Maß und die Lage der Unwucht eines Werkzeughalters hochpräzise ermitteln lassen, sind bekannt, beispielsweise aus der deutschen Patentanmeldung DE 102 33 917 A1.

Ebenfalls bekannt ist es, nach Bestimmung des Maßes und der Lage der Unwucht an geeigneter Stelle etwas Material am Werkzeughalter abzunehmen, um den Werkzeughalter auf diese Art und Weise dauerhaft auszuwuchten.

Im Regelfall spannt man den Werkzeughalter zu diesem Zweck aus der Wuchtmaschine aus und nimmt an der vorbestimmten Stelle die nötige Materialmenge ab. Danach wird der Werkzeughalter erneut in die Wuchtmaschine eingespannt, um eine Kontrollmessung durchzuführen. Das Ein- und Ausspannen kostet Zeit und beeinträchtigt unter Umständen die Messgenauigkeit, da immer damit zu rechnen ist, dass der Werkzeughalter im Zuge des Wiedereinspannens etwas anders zu liegen kommt als bei der ersten Einspannung.

Es ist daher intern auch schon daran gedacht worden, den Werkzeughalter eingespannt zu lassen, während er zum Zwecke seiner Auswuchtung spanabhebend bearbeitet wird. Zu diesem Zweck muss die Spindeleinheit festgesetzt werden, damit die im Zuge der spanenden Bearbeitung auftretenden Kräfte und Schwingungen nicht die hochempfindlichen Mess-Sensoren beschädigen bzw. die zur Messeinrichtung gehörende Spindelaufhängung. Außerdem könnte die Spindeleinheit ohne Arretierung dem materialabtragenden Werkzeug ausweichen und so die Genauigkeit des Materialabtrags beeinträchtigen. Es ist bereits in Erwägung gezogen worden, zu diesem Zweck von zwei Seiten her Klemmbacken an die Spindeleinheit anzulegen, die diese nach Art einer Außenbremstrommel zwischen sich einklemmen. Ein derartiges Vorgehen belastet jedoch zumindest die Sensoren und führt daher ebenfalls zu Messungenauigkeiten.

Zudem verhindert eine Klemmvorrichtung, die direkt an der Spindeleinheit angreift, auch eine Drehbewegung der Spindel. Eine solche Drehbewegung kann aber bei bestimmten Arten des Materialabtrags, z. B. Fräsen einer Nut entlang des Außenumfangs des Prüflings, durchaus erwünscht und notwendig sein.

Darüber hinaus ist es aus der US 2954711 bekannt, die Spindeleinheit an ihrem unteren Ende mit einer Kupplung zu versehen, die geschlossen werden kann, um zu verhindern, dass sich das Werkstück in der Wuchtmaschine unbeabsichtigt dreht, wenn es bearbeitet wird.

Es ist Aufgabe der Erfindung, eine Vorrichtung anzugeben, mit der die Rotationsunwucht eines Werkzeughalters bestimmt und beseitigt werden kann, ohne die genannten Probleme in Kauf nehmen zu müssen.

Diese Aufgabe wird mit den Merkmalen des Anspruchs 1 gelöst. Erfindungsgemäß wird die Wuchtmaschine mit einer Spindelarretierung ausgerüstet, die so gestaltet ist, dass sie die Spindeleinheit derart festsetzten kann, dass die Spindelaufhängung der Spindeleinheit, oder zumindest der oder die Sensoren, sowohl während des Festklemmens der Spindeleinheit als auch wäh- rend der Materialabnahme am Werkzeughalter (im Wesentlichen) außerhalb des Kraftflusses liegen, der zwischen der Spindeleinheit und der Maschinenbasis entsteht. Weder die im Zuge des Festklemmens noch die anschließend im Zuge der Materialabnahme auftretenden Kräfte beeinflussen also die für die Messgenauigkeit mitverantwortlichen Spindelaufhängungen bzw. lassen zumindest die noch empfindlicheren Sensoren unbeeinflusst. Denn diese genannten Kräfte werden erfindungsgemäß unmittelbar über die Spindelarretierung in die Maschinenbasis abgeleitet.

Es ist also so, dass die Spindelarretierung nach Art einer Klemmvorrichtung ausgestaltet ist, mit deren Hilfe die Spindelanordnung, ohne ihr eine spürbare Lageänderung aufzuzwingen, festgeklemmt werden kann, sodass die Spindeleinheit, d. h. die Trommel, in der die Spindel gelagert und am Maschinengestell gehalten ist, keine Schwenk- oder Translationsbewegungen ausführen kann. Bei gelöster Klemmung hängt die Spindeleinheit hingegen ausschließlich an ihren Spindelaufhängungen und kann daher völlig frei schwingen.

Es sind mindestens zwei Klemmleisten vorhanden, deren Klemmflächen in unterschiedlichen, rechtwinklig oder schräg zueinander verlaufenden Ebenen angeordnet sind. Es sind, allgemeiner gesagt, also zwei getrennte Klemmsysteme vorgesehen, von denen das erste die Spindeleinheit gegen die Einwirkung von Kräften aus einer ersten Richtung festgesetzt und das zweite die Spindeleinheit gegen die Einwirkung von Kräften aus einer zweiten, von der ersten Richtung unterschiedlichen Richtung festsetzt. Die erste Richtung entspricht einer Richtung parallel zur Drehachse der Spindel und die zweite Richtung einer Richtung senkrecht dazu, wobei beide Richtungen zugleich auch senkrecht zu der Messrichtung M der Sensoren oder des Sensors orientiert sind. Eine solche Gestaltung erlaubt es, die Spindeleinheit durch Einklemmen der Klemmleisten insgesamt starr festzusetzen, obwohl jede der Klemmleisten in einer Richtung biegeweich bzw. federnd nachgiebig ist - auf diese Art und Weise ergänzen sich die Klemmleisten gegenseitig in ihrer Funktion bzw. stützen sich gegenseitig. Das verleiht der Spindelarretierung eine ausgesprochen starre Charakteristik und ermöglicht eine hoch präzise Materialabnahme am Prüfling bzw. am Werkzeughalter, was dessen Auswuchtgüte verbessert.

Dabei ist die die Spindelarretierung ausmachende Klemmvorrichtung vorzugsweise so gestaltet, dass die von den Klemmbacken gegenüber den mit ihnen zusammenwirkenden Klemmflächen aufgebrachten Normalkräfte bzw. deren Resultierende eine Wirklinie aufweisen, die die Spindeldrehachse nicht schneidet. Die Spindeleinheit wird also nicht etwa nach Art einer Außenbremstrom-mel geklemmt, also nicht mit Hilfe mindestens zweier Klemmbacken, welche an sich beidseitig der Spindeldrehachse gegenüberliegenden Umfangsbereichen der Spindeleinheit angreifen und damit der Spindelanordnung unweigerlich eine Lageänderung aufzwingen, sobald sie nicht (wegen der unvermeidbaren Wärmedehnungen mehr oder minder zufällig) absolut symmetrisch zwischen den sich beim Festklemmen auf einander zu bewegenden Klemmbacken liegt.

Sinnvollerweise ist die Klemmvorrichtung so konstruiert, dass von ihr im Zuge des Festklemmens der Spindeleinheit keine Kräfte in einer Richtung parallel zu der Richtung, in der der oder die Sensoren zur Messung der Unwucht ansprechen, erzeugt werden.

Bei einer bevorzugten Ausführungsform weist die Spindelarretierung Klemmflächen auf, auf die öffen- und schließbare Klemmbacken wirken, wobei die Klemmbacken und/oder die Klemmflächen derart gelenkig oder biegeweich ausgeführt sind, dass die Klemmbacken durch ihre Einwirkung auf die Klemmflächen im Wesentlichen keine Kraft auf die Spindelaufhängung ausüben oder zumindest keine Kraft auf die Spindeleinheit ausüben, die die Sensoranordnung wesentlich belastet. Vorzugsweise sind die besagten Klemmflächen an Blattfedern ausgebildet, die die Klemmleisten verkörpern, von denen gleich noch die Rede ist.

Derartige Klemmbacken oder Klemmflächen, deren Positionen schon aufgrund von Temperatureinflüssen nie stets die gleichensind, zwingen der Spindeleinheit keine spürbare Lageänderung auf, wenn sie sich an die Spindeleinheit anlegen. Stattdessen ist es umgekehrt - die relativ schwere und entsprechend träge Spindeleinheit zwingt die Klemmbacken oder Klemmflächen dazu, sich an die Spindeleinheit anzupassen. An dieser Stelle muss man sich vergegenwärtigen, dass der Freigang bei gelösten Klemmbacken von Haus aus recht klein ist und im Regelfall unterhalb 0,5 mm liegt (0,5 mm bis 0,05 mm, vorzugsweise etwa 0,15 mm).

Vorzugsweise sind mindestens zwei Klemmleisten vorgesehen, die parallel und mit Abstand zueinander angeordnet sind. Durch eine solche Anordnung erhöht sich der Widerstand, den die Spindelarretierung den im Zuge des Materialabtrags am Prüfling entstehenden Bearbeitungskräften entgegensetzen kann, welche die Tendenz haben, die Spindeleinheit zu verkippen.

Es ist günstig, wenn die Klemmbacken jeweils eine Schwenkleiste umfassen, die einen elastisch verformbaren Haltesteg aufweist, um den die Schwenkleiste im Zuge der Betätigung des Klemmbackens gegen die Klemmleiste geschwenkt wird, um diese einzuklemmen.

Hierdurch kann auf ein Scharnier mit relativ zueinander gleitbeweglichen Elementen zur Anlenkung der Schwenkleiste verzichtet werden. Dies verbessert die Messgenauigkeit bzw. die Zuverlässigkeit, da sich nie ganz ausschließen lässt, dass ein Scharnier - zumindest auf Dauer - zu viel Spiel bekommt und dadurch bei der Unwuchtmessung minimal zu "klappern" beginnt, was die genaue Erfassung der sehr kleinen unwuchtbedingten Bewegungen stört.

Bei einer bevorzugten Weiterbildung der Erfindung werden mindestens zwei Klemmbacken von einem gemeinsamen Aktuator betätigt. Eine solche Gestaltung ist nicht nur unter dem Gesichtspunkt der Verringerung der Anzahl der bewegten Bauteile zweckmäßig, sondern verringert bzw. beseitigt die Gefahr, dass es im Zuge des Festsetzens der Spindeleinheit schon dadurch zur Ausübung von Kräften auf die Spindeleinheit kommt, dass unterschiedliche Aktuatoren toleranzbedingt unterschiedliche Kräfte entwickeln.
Eine besonders bevorzugte Weiterbildung der Erfindung zeichnet sich dadurch aus, dass der Aktuator die mindestens eine ihm zugeordnete Schwenkleiste unter Zwischenschaltung eines Kraft-Weg-Wandlers betätigt, der die vom Aktuator in einer ersten Wirkrichtung aufgebrachte Betätigungskraft in eine zweite, annähernd dazu senkrechte Wirkrichtung umlenkt, bevor er sie der Schwenkleiste mitteilt und dabei zugleich die vom Aktuator entlang eines längeren Weges aufgebrachte kleinere Kraft in eine entlang eines kürzeren Weges wirkende größere Kraft umwandelt.

Idealerweise arbeitet ein solcher Kraft-Weg-Wandler nach dem Kniehebelprinzip, d. h. er wirkt auf eine Membrane oder ein schwenkbar angelenktes Gestänge bzw. eine schwenkbar angelenkte, meist v-förmige Plattenanordnung in einer Richtung ein, die im Wesentlichen senkrecht zur Oberfläche der Membrane bzw. zur Längsachse des Gestänges oder zur Schwenkachse der Plattenanordnung verläuft. Er zwingt dadurch die Membrane bzw. das Gestänge oder die Plattenanordnung eine Bewegung auszuführen, infolge derer sie sich im Wesentlichen orthogonal zur Einwirkrichtung längen. Infolge dieser Längenänderung entstehen große Kräfte, die zur Betätigung der Schwenkleisten und zur kräftigen Klemmung der Klemmleisten genutzt werden.

Weitere Vorteile, Wirkungsweisen und Ausgestaltungsmöglichkeiten ergeben sich nun aus den nachfolgend, anhand der Figuren geschilderten Ausführungsbeispielen.

Es zeigen:
Figur 1: einen Mittelschnitt durch eine erfindungsgemäße Ausführungsform (Spindelarretierung 64, nicht eingezeichnet);
Figur 2: eine Schnittansicht von oben, durch ein erfindungsgemäßes Ausführungsbeispiel (Spindelarretierung 64, nicht eingezeichnet);
Figur 3: eine perspektivische Ansicht eines Ausführungsbeispiels, mit angedeuteter Spindelarretierung;
Figur 4: ein Mittelschnitt durch die erste Ausführungsform, wobei nur ein erster Teil gezeigt ist, in gelüftetem Zustand;
Figur 5: zeigt den gleichen Mittelschnitt durch die erste Ausführungsform wie die Figur 4, wobei hier aber andere, zweite Teile der Spindelarretierung gezeigt sind, in geklemmtem Zustand;
Figur 6: zeigt einen Querschnitt von oben durch das erste Ausführungsbeispiel, wobei nur ein zweiter Teil der Spindelarretierung gezeigt ist (auch im gelüfteten Zustand);
Figur 7: zeigt einen Querschnitt von oben durch das erste Ausführungsbeispiel, wobei nur ein zweiter Teil der Spindelarretierung gezeigt ist (in geklemmtem Zustand);
Figur 8: zeigt einen perspektivischen Querschnitt durch ein zweites Ausführungsbeispiel (nur) der erfindungsgemäßen Spindelarretierung;
Figur 9: zeigt einen Querschnitt von oben durch ein drittes Ausführungsbeispiel der erfindungsgemäßen Spindelarretierung;

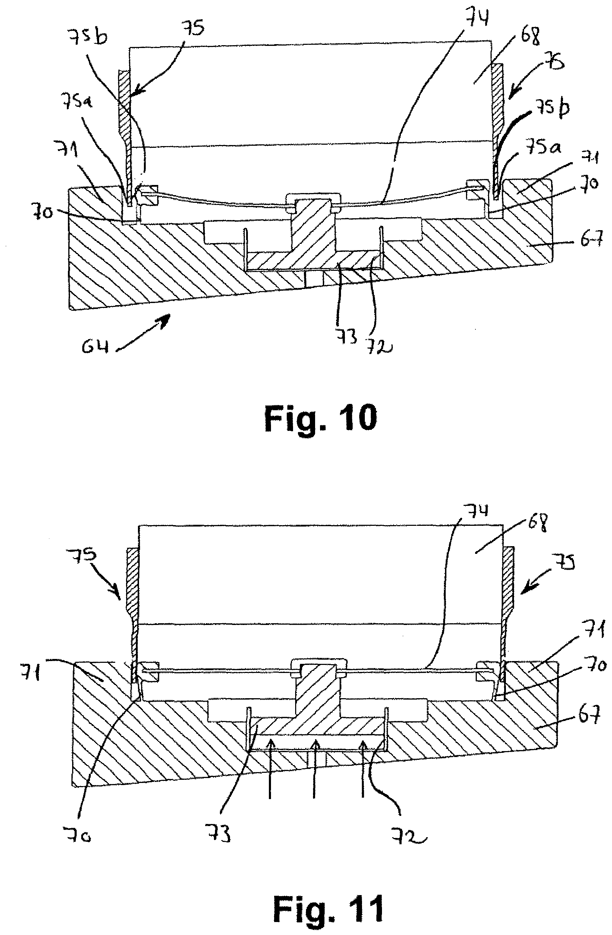

Figuren 10 und 11: zeigen zwei weitere Querschnitte durch das erste Ausführungsbeispiel der erfindungsgemäßen Spindelarretierung und dienen zur weiteren Illustration.

Zunächst ist kurz allgemein die Funktion des hier zum Zwecke der Veranschaulichung der Erfindung vorgestellten Ausführungsbeispiels zu beschreiben.

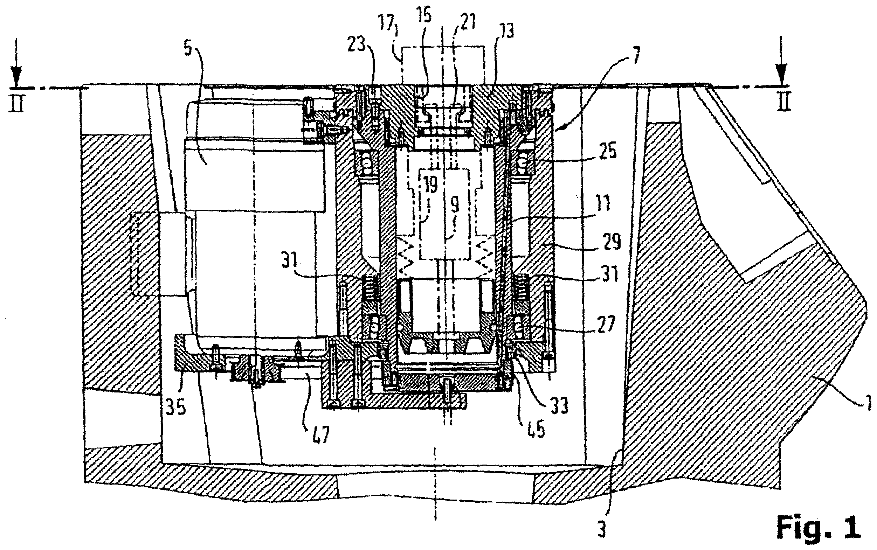

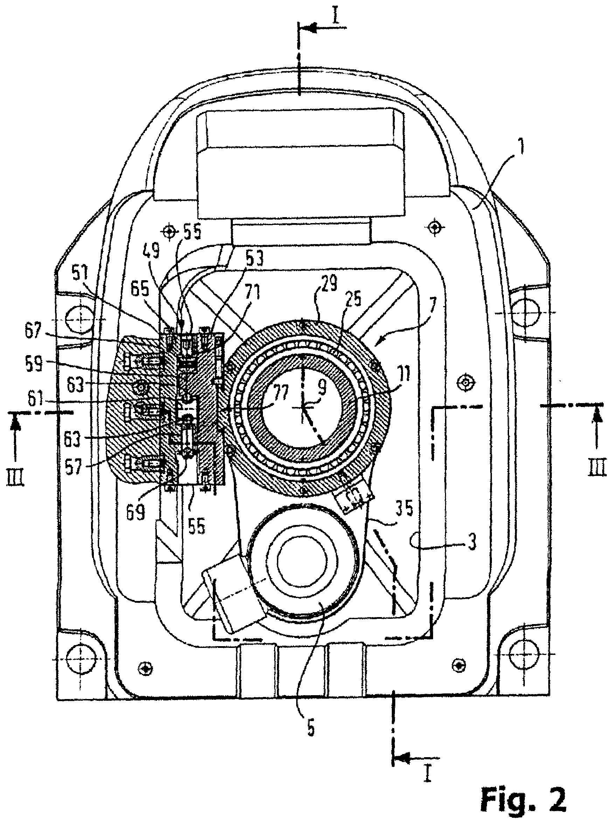

Die in den Fig. 1 und 2 in Gesamtansicht dargestellte Wuchtmaschine hat ein als Maschinenbasis dienendes Gehäuse 1. Das Gehäuse beherbergt in einer von oben zugänglichen Kammer 3 eine von einem Elektromotor 5 angetriebene Spindeleinheit 7. Die Spindeleinheit 7 besitzt eine rotierende Spindel 11, deren Drehachse 9 vorzugsweise vertikal angeordnet ist.

Die Spindel weist an ihrem oberen Ende einen betriebsmäßig auswechselbaren Kupplungsadapter 13 mit einer zur Drehachse 9 zentrischen Aufnahmeöffnung auf. Diese dient zum Anschluss eines auszuwuchtenden, genormten, bei dem Werkzeughalter 17 angedeuteten Prüflings. Bei dem Prüfling kann es sich um einen Werkzeughalter, z.B. in herkömmlicher Steilkegel-Ausführung oder um einen Hohlschaftkegel-Halter (HSK-Halter) oder auch um einen anderen Rotor handeln.

Die bei diesem Ausführungsbeispiel aus dem Elektromotor 5 und der Spindeleinheit 7 bestehende Baugruppe ist mittels einer lösbar am Spindelhalter 29 befestigten Spindelaufhängung 49 am Gehäuse bzw. der Maschinenbasis 1 gehalten.

Die Spindelaufhängung ist so gestaltet, dass die Spindeleinheit in Messrichtung M leicht beweglich ist, in allen anderen Richtungen jedoch relativ starr aufgehängt ist. In Messrichtung sind Sensoren angebracht, die die Auswirkung der Unwucht des Prüflings messen. Dies kann beispielsweise eine Kraft, eine Auslenkung oder eine Beschleunigung etc. sein.

Der auszuwuchtende Werkzeughalter wird im Regelfall mit Hilfe des Kupplungsadapters 13 an der Spindel 11 befestigt, woraufhin die Spindel in Rotation versetzt wird. Mit Hilfe der Sensoren 61 und einer gesonderten Einrichtung zur Bestimmung der Winkellage der Spindel kann nun die genaue Lage und das Maß der Unwucht bestimmt werden. Die numerische Steuerung der Wuchtmaschine berechnet darauf, an welcher Stelle bzw. welchen Stellen des Werkzeughalters wie viel Material mit Hilfe der wuchtmaschineneigenen Materialabtragseinrichtung 65 vom auszuwuchtenden Werkzeughalter abgenommen werden muss, um die angestrebte Auswuchtgüte zu erreichen.

Die wuchtmaschineneigene Materialabtragseinrichtung 65 ist vorzugsweise in Gestalt eines Bohrwerks ausgeführt, das mit Hilfe eines Spiralbohrers eine entsprechende Materialmenge abträgt. Stattdessen kann der Materialabtrag auch mit anderen Verfahren wie Fräsen, Schleifen etc. durchgeführt werden.

Vorzugsweise liegt die Materialabtragsvorrichtung 65 der Spindelarretierung 64 am Umfang der Spindeleinheit diametral gegenüber. Die Spindelaufhängung 49 hingegen liegt seitlich neben der Spindelarretierung 64, sodass ihre horizontalen Mittellinien einen rechten Winkel einschließen.

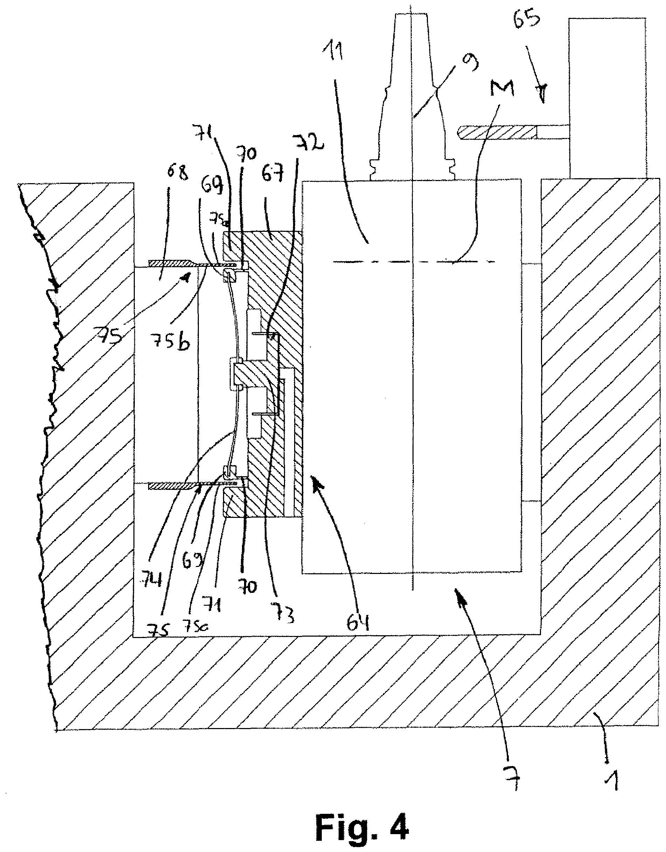

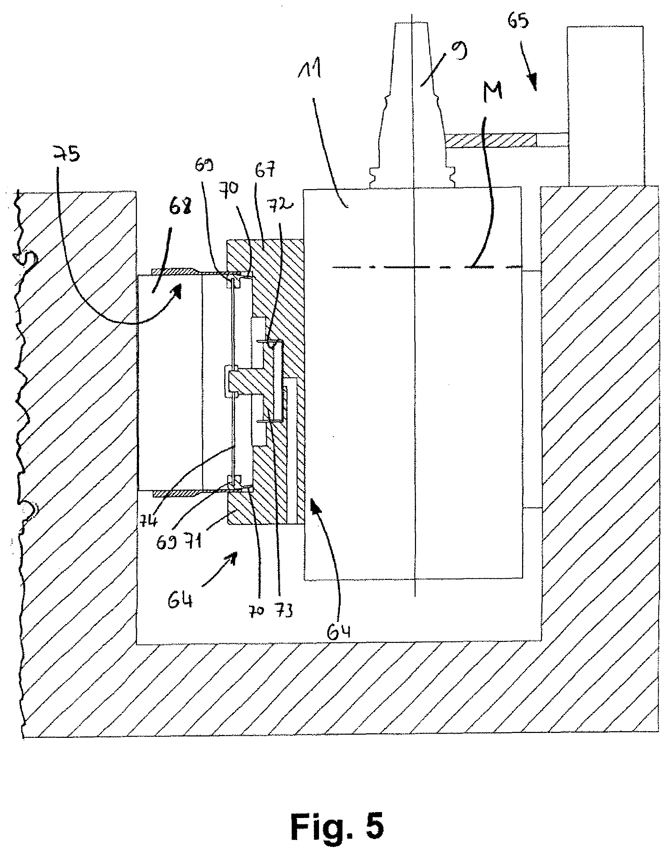

Der Materialabtrag erfolgt, ohne dass der Werkzeughalter von der Spindel 11 gelöst wird. Zu diesem Zweck positioniert der Spindelantrieb die Spindel 11 so, dass die Stelle des Werkhalters, an der der Materialabtrag erfolgen soll, positionsgenau unter dem Spiralbohrer zu liegen kommt, vgl. auch die Fig. 4 und 5, in denen die Materialabtragseinrichtung 65 angedeutet ist. Der Spindelantrieb dient ebenfalls dazu, um die Spindel während des Materialabtrags in Position zu halten bzw. um eine für den Materialabtrag evtl. nötige Drehbewegung der Spindel auszuführen.

Vor Beginn des Materialabtrags wird die erfindungsgemäße Spindelarretierung 64 aktiviert, die die Spindeleinheit 7 so festsetzt, dass sie sich unter dem Einfluss der Kräfte, mit denen die Materialabtragseinrichtung die Spindeleinheit beaufschlagt, nicht bzw. nicht in einer Richtung bewegt, in der an den Sensoren aufgrund der Bewegung ein Signal entstehen würde. Es werden also keine wesentlichen Kräfte auf die Sensoren 61 übertragen. Das Besondere an der Spindelarretierung 64 ist mithin, dass sie die Spindeleinheit arretiert, ohne dass durch den Arretiervorgang auch solche Kräfte hervorgerufen werden, die mehr als nur unwesentlich an die Sensoren 61 weitergegeben werden. Erreicht wird dies, indem die Spindelarretierung so ausgelegt ist, dass im Zuge ihrer Aktivierung dann ausschließlich solche Kräfte erzeugt werden, die über die die be-wegliche Aufhängung der Spindeleinheit 11 realisierenden Feder- bzw. Blattelemente 55 von der Spindeleinheit in die Maschinenbasis abgeleitet werden können, ohne die Sensoren 61 zu belasten.

Die Fig. 4 zeigt einen Querschnitt durch ein Ausführungsbeispiel der erfindungsgemäßen Spindelarretierung 64, wobei wesentliche, aber nicht alle Teile der Spindelarretierung 64 zu erkennen sind.

Auf den ersten Blick zu erkennen sind die Maschinenbasis 1, die Spindeleinheit 7, die Drehachse 9, die Spindel und die noch nicht aktivierte Materialabtragsvorrichtung 65.

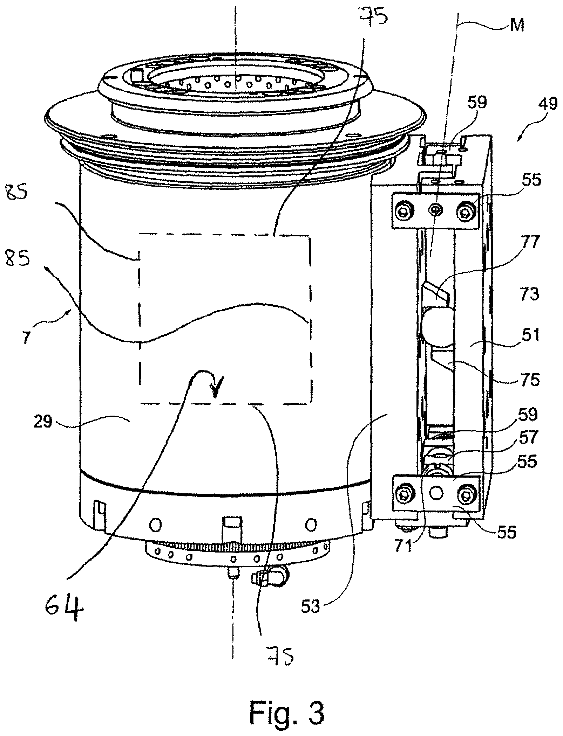

Die oben erörterte Spindelaufhängung 49 ist nicht zu erkennen, da sie in Fig. 4 durch die Spindeleinheit 7 verdeckt wird, vgl. auch Figur 3.

Ebenfalls sehr gut zu erkennen ist die an der Spindeleinheit angebrachte erste Klemmbackeneinheit 67 und die damit inter-agierende, an der Maschinenbasis 1 befestigte erste Klemmleisteneinheit 68. Zur Befestigung der Klemmbackeneinheit an der Spindeleinheit wird idealerweise eine Schwalbenschwanzbefestigung oder eine vergleichbare, zum Zwecke des Ausbaus der Spindeleinheit leicht lösbare und später wieder präzise herstellbare Befestigung gewählt.

Die erste Klemmbackeneinheit 67 trägt erste Schwenkleisten 69, die mit ihrem hier nach Art einer dünnen, durchgehenden oder lokal unterbrochenen Leiste ausgeführten Haltesteg elastisch an der Basis der Klemmbackeneinheit 67 festgelegt sind. Statt eines derartigen elastischen Haltesteges könnte beispielsweise auch ein entsprechendes Scharnier zum Einsatz kommen, das jedoch unter Präzisionsgesichtspunkten dem elastischen Haltesteg auf Dauer unterlegen ist. Die Schwenkleisten bilden hier längliche, gerade Leisten mit ebenen Klemmflächen aus, deren Längsachse senkrecht zur Zeichenebene der Fig. 4 verläuft, d. h. senkrecht zur Spindeldrehachse 9.

Die Klemmbackeneinheit 67 trägt des Weiteren leistenartige erste Widerlager 71, die im Klemmbetrieb mit den Schwenkleisten 69 zusammenwirken und ebenfalls ebene Klemmflächen besitzen und gemeinsam mit den ersten Schwenkleisten einen ersten Klemmbacken bilden.

Vorzugsweise direkt in der Klemmbackeneinheit 67 selbst ist ein Zylinder 72 ausgebildet, in dem ein zweckmäßigerweise pneumatisch betätigter Kolben 73 läuft, welcher bei dem vorliegenden Ausführungsbeispiel den Aktuator bildet. Dessen Kolbenstange ist mit einer zweckmäßigerweise aus Metall bzw. Federstahl gefertigten, gekrümmten Membrane 74 gekoppelt, die, zumindest abschnittweise, an ihren äußeren Enden mit den Schwenkleisten 69 gekoppelt ist und deren Funktion gleich noch näher erläutert wird. Die Membrane ist dünn genug, um in Richtung senkrecht zu ihrer Hauptfläche, mehr als nur unwesentlich ausgelenkt werden zu können und dick genug, um in Richtung ihrer Hauptfläche Kräfte aufbringen bzw. weiterleiten zu können, die die Schwenkleisten zuverlässig klemmend an die Klemmleisten und die Widerlager anlegen. Um sicherzustellen, dass die flächige Membrane 74 nicht durch punktuelle Einwirkung der Kolbenstange lokal überlastet wird und sich ungleichmäßig verformt, wirkt die Kolbenstange vorzugsweise über eine die lokale Festigkeit der Membrane erhöhende Stützleiste 76 auf die Membrane 74 ein.

Alternativ zur Membrane 74 können auch jeweils zwei starre Platten verwendet werden, die gelenkig mit dem Aktuator bzw. der Stützleiste 76 und den Schwenkleisten 69 verbunden sind.

Die erste Klemmleisteneinheit 68 trägt zwei erste Klemmleisten 75. Die Klemmleisten 75 bestehen zweckmäßigerweise aus einem Federstahl. Sie bilden hier längliche, gerade Leisten aus, deren Längsachse senkrecht zur Zeichenebene der Fig. 4 verläuft, d. h. senkrecht zur Spindeldrehachse 9.

Das freie Ende der Klemmleisten ist hinreichend weit von deren Fußpunkt entfernt, dass sie sich durch elastische Verformung zwischen den Schwenkleisten und den Widerlagern zentrieren, ohne wesentliche Kräfte auf die Spindeleinheit auszuüben.

Die Fig. 4 zeigt die Spindelarretierung in inaktivem, d. h. gelüftetem Zustand. Dabei ist die Membrane bei diesem Ausführungsbeispiel so ausgelegt, dass sie in der von Fig. 4 gezeigten Position entspannt ist. In diesem Zustand ist zwischen den ersten Schwenkleisten 69 und ihren ersten Widerlagern 71 jeweils eine sich senkrecht zur Zeichenebene erstreckende Nut frei, in die die korrespondierende erste Klemmleiste mit Spiel hineinragt, ohne während der Messung (d. h. bei sich unter dem Einfluss der Unwucht mit geringer Amplitude bewegenden Spindeleinheit 7) mit der jeweiligen Schwenkleiste oder dem jeweiligen Widerlager in Kontakt zu kommen. Die Spindeleinheit 7 hat also bei inaktiver Spindelarretierung 64 völligen Freigang. Dabei beträgt die maximale Breite der Nut in einer Richtung senkrecht zur Längsrichtung der Nut lediglich 0,5 mm bis 0,05 mm, vorzugsweise etwa 0,15 mm. Entsprechend klein ist der Freigang der jeweiligen Klemmleiste.

Bevor die Materialabtragsvorrichtung 65 auf das Werkstück einzuwirken beginnt, wird die Spindelarretierung 64 aktiviert. Zu diesem Zweck wird der erste Kolben 73 mit Druckluft beaufschlagt, sodass er sich in Richtung der ersten Membrane 74 bewegt. Nachdem die Ränder der Membrane an den ersten Schwenkleisten 69 festgelegt sind, wird die Membrane durch die Kolbenbewegung mehr und mehr in ihren gestreckten, ebenen Zustand gebracht. Infolge dessen übt die Membrane eine Druckkraft auf die Schwenkleisten 69 aus, welche die Schwenkleisten 69 unter elastischer Verformung ihres Haltestegs 70 in Richtung der Widerlager 71 schwenken lässt. Hierdurch werden schließlich die ersten Klemmflächen 75a, 75b einer jeden ersten Klemmleiste 75 zwischen je einer ersten Schwenkleiste 69 und einem ersten Widerlager 71 bzw. deren Klemmflächen mit großer Kraft eingeklemmt. Letztes deshalb, weil die Membrane 74 funktionell einen Kraft-Weg-Wandler darstellt, der die vergleichsweise geringe Betätigungskraft, die der Kolben 73 entlang seines vergleichsweise großen Kolbenhubes aufbringt, in eine im Vergleich zur Betätigungskraft des Kolbens große Klemmkraft umsetzt, die aber nur auf dem im Vergleich zum Kolbenhub kurzen Weg wirkt, bis die Schwenkleisten unter Zwischenlage der Klemmleisten gegen die Widerlager auf Block gehen. Anstelle der bevorzugt zu verwendenden Membrane könnte ein solcher Kraft-Weg-Wandler beispielsweise auch durch ein Gestänge oder eine Art Kniehebel realisiert werden, das bzw. der die Schwenkleisten in entsprechender Weise, wie die Membrane, beiseite drückt, sobald sich der Kolben bewegt.

Um die Spindelarretierung wieder zu deaktivieren, wird entweder der Arbeitsraum des Kolbens 73 drucklos geschaltet, sodass die Membrane 74 aufgrund der ihr eigenen Rückstellkräfte und ggf. der Rückstellkräfte der Schwenkleisten wieder in ihre entspannte Position zurückkehrt, wodurch die Klemmung aufgehoben wird. Alternativ kann der Kolben bidirektional betätigbar ausgeführt sein und so angesteuert werden, dass er die Membrane aktiv in ihre entspannte Position zurückdrückt.

Der entscheidende Punkt bei alledem ist, dass die ersten Klemmleisten in Richtung der Drehachse der Spindel biegeweich ausgeführt sind. Aufgrund dessen erzeugt die Arretierungseinrichtung 64 im Zuge des Festsetzens der Spindeleinheit auch dann keine Kräfte, die die Spindeleinheit verlagern und damit die Sensoranordnung 61 belasten, wenn die Klemmflächen 75a und 75b bei inaktiver Spindelarretierung nicht genau mittig liegen, d. h. wenn die Klemmleisten sich nicht mittig im Spalt zwischen ihren jeweiligen Schwenkleisten 69 und ihren jeweiligen Widerlagern 71 befinden. Mit Letzterem ist in der Praxis auch bei hochpräzise gefertigten Maschinen wie den hier zur Diskussion stehenden Wuchtmaschinen wegen der allgegenwärtigen thermischen Ausdehnung immer wieder zu rechnen.

Maßgeblich ist, dass die Klemmleisten in einem derartigen Fall in einem solchen Maß der elastischen Verformung unterliegen, dass sie sauber an den Schwenkleisten und ihren Widerlagern zur Anlage kommen, ohne dass wesentliche Kräfte auf die Spindeleinheit übertragen werden - die eventuell aufgrund der elastischen Verformung auftretenden geringen Kräfte wirken in einer Richtung parallel zur Drehachse der Spindel. Sie werden daher ohne Weiteres von der Spindelaufhängung 49 aufgenommen, deren Blattfederelemente 55 Kräften, die in dieser Richtung wirken, einen hohen Widerstand entgegensetzen und daher solche Kräfte zuverlässig von der Sensoreinrichtung 61 fernhalten.

Gleichzeitig sind die ersten Klemmleisten jede für sich so ausgeführt, dass sie in Richtung der Kräfte senkrecht zur Drehachse der Spindel, die durch die Einwirkung der Materialabtragsvorrichtung auf das zu wuchtende Werkstück bzw. den Prüfling 17 entstehen, relativ steif sind. Zudem sind die beiden ersten, gleichsinnig wirkenden Klemmleisten hinreichend beabstandet voneinander angebracht, was ebenfalls die (gemeinsame) Steifigkeit bzw. den Widerstand erhöht, der einem Verkippen der Spindeleinheit entgegengesetzt werden kann.

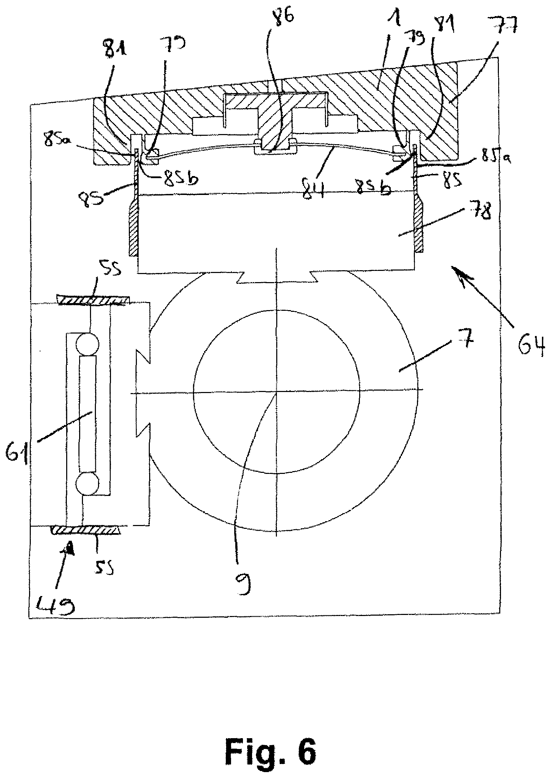

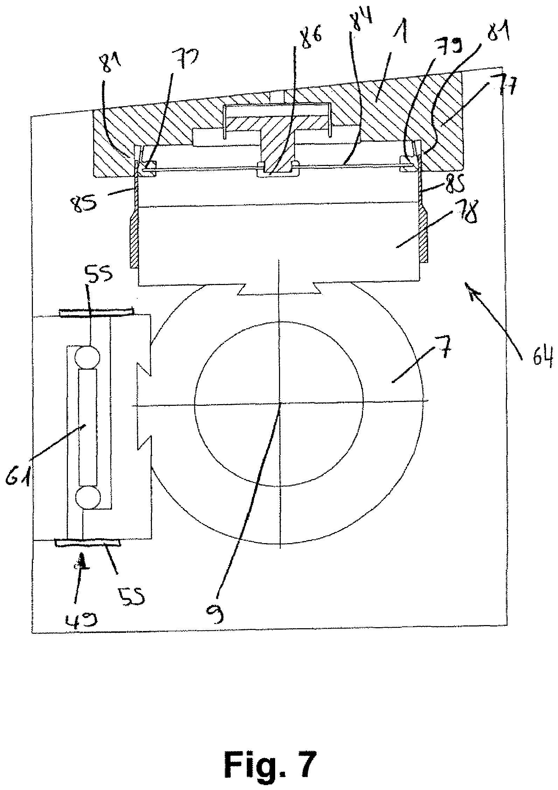

Die soeben beschriebene erste Klemmbackeneinheit und die soeben beschriebene erste Klemmleisteneinheit müssen die durch die Materialabtragsvorrichtung erzeugten Kräfte nicht allein abfangen, sondern gemeinschaftlich mit einer von den Fig. 6 und Fig. 7 gezeigten zweiten Klemmbackeneinheit 77 und einer zweiten Klemmleisteneinheit 78. Diese beiden zweiten Klemmbackeneinheiten 77, 78 sind im Prinzip genauso gestaltet wie die soeben beschriebenen ersten Klemmbackeneinheiten 67, 68, sodass für die beiden zweiten Klemmbackeneinheiten vorbehaltlich der nachfolgend geschilderten Unterschiede das für die beiden ersten Einheiten Beschriebene sinngemäß gilt.

Die zweite Klemmbackeneinheit 77 ist vorzugsweise an der Maschinenbasis 1 befestigt, anstatt an der Spindeleinheit 7. Umgekehrt ist die zweite Klemmleisteneinheit 78 vorzugsweise an der Spindeleinheit 7 bzw. an der ersten Klemmbackeneinheit 67 befestigt, anstatt an der Maschinenbasis 1, wobei idealerweise eine Schwalbenschwanzbefestigung oder eine vergleichbare, zum Zwecke des Ausbaus der Spindeleinheit leicht lösbare Befestigung gewählt wird. Darüber hinaus sind die zweite Klemmbackeneinheit 77 und die zweite Klemmleisteneinheit 78 idealerweise um 90° verdreht gegenüber der ersten Klemmbackeneinheit 67 bzw. der ersten Klemmleisteneinheit 68 eingebaut, sodass die zweiten Klemmflächen 85a, 85b bzw. die Längsachsen der zweiten Klemmleisten 85 parallel zur Drehachse 9 der Spindel 1 verlaufen.

Die zweiten Klemmleisten 85 sind in einer Richtung senkrecht zur Drehachse 1 der Spindel und senkrecht zur Messrichtung M der Sensoreinrichtung 61 elastisch. Dort, wo - wie im hiesigen Ausführungsbeispiel - eine Spindelaufhängung 49 mit Blattfederelementen 55 verwendet wird, sind die Klemmleisten 85 also in einer Richtung elastisch, die mit der (in diesem Ausführungsbeispiel horizontal verlaufenden) Längsachse der Blattfe-dern 55 parallel ist. Die geringen Kräfte, die durch die elastische Verformung der Klemmleisten 85 entstehen, werden also ohne Weiteres von den Blattfedern 55 aufgefangen und somit von den Sensoren 61 ferngehalten.

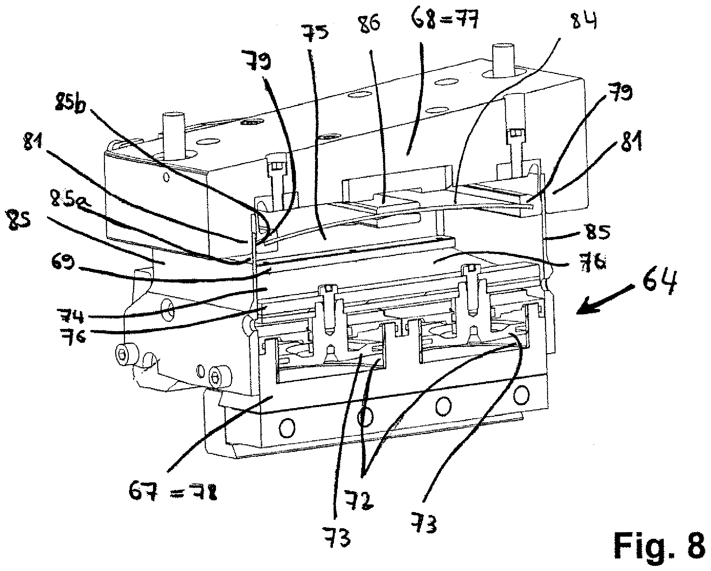

Das bislang Beschriebene sei nun anhand der Fig. 8 noch einmal übersichtlich zusammengefasst - wobei die Fig. 8 eine etwas abgewandelte Variante der Spindelarretierung 64 zeigt, die sich von der zuvor beschriebenen ersten Variante aber nur dadurch unterscheidet, dass der Aktuator jeweils in Gestalt eines Kolbentandems ausgeführt ist, anstatt eines einzelnen Kolbens und ansonsten mit ihr identisch ist.

In Figur 8 erkennt man die spindelseitig befestigte erste Klemmbackeneinheit 67 mit ihren beiden Zylindern 72 und ihren beiden Kolben 73, die mittels einer Stützleiste 76 auf die erste Membrane 74 einwirken. Weiterhin ist zu erkennen, wie die erste Membrane an einer der beiden ersten Schwenkleisten 69 befestigt ist, hinter der eine der ersten Klemmleisten 75 zu erkennen ist.

Darüber hinaus erkennt man die beiden zweiten Klemmleisten 85 mit ihren Klemmflächen 85a und 85b, die jeweils zwischen der zweiten Schwenkleiste 79 und dem zugehörigen zweiten Widerlager 81 geklemmt werden, in der gleichen Art und Weise, wie oben für das erste Widerlager beschrieben.

Die beiden zweiten Klemmleisten sind an den Stirnseiten der ersten Klemmbackeneinheit befestigt, sodass die Basis der ersten Klemmbackeneinheit zugleich als Basis der zweiten Klemmleisteneinheit dient, weshalb man das Ensemble aus den zweiten Klemmleisten 85 und der Basis der ersten Klemmbackeneinheit als zweite Klemmleisteneinheit 78 definieren kann, sodass letztendlich eine funktionale Integration vorliegt, da-hingehend, dass die erste Klemmbackeneinheit 67 zugleich die zweite Klemmleisteneinheit 78 ist und umgekehrt. Sinngemäß Gleiches für die erste, an der Maschinenbasis befestigte Klemmleisteneinheit 68, die funktional mit der zweiten Klemmbackeneinheit 77 verschmolzen ist.

Darüber hinaus zeigt die Fig. 8 die zweite Membrane 84 sehr deutlich, die hier ebenfalls über eine zweite Stützleiste 86 von einem entsprechend angeordneten, nicht näher gezeigten Kolbentandem mit Kraft beaufschlagt wird.

Man sieht anhand dessen, dass die Klemmleisten ein Rechteck zwischen sich einschließen, das in geklemmtem Zustand ein großes Flächenträgheitsmoment aufweist und daher die Spindeleinheit starr festhält - fast so, als kralle sich die Spindeleinheit an einem rechteckigen Kastenträger fest.

Alternativ ist auch eine etwas abweichende Klemmleistenanordnung denkbar, etwa so, dass die Klemmleisten ein Dreieck zwischen sich einschließen oder einen Kreis. Kräftemäßig am günstigsten und herstellungsseitig am einfachsten zu beherrschen ist indes die Anordnung der Klemmleisten in Gestalt der Seitenflächen eines rechteckigen Quaders.

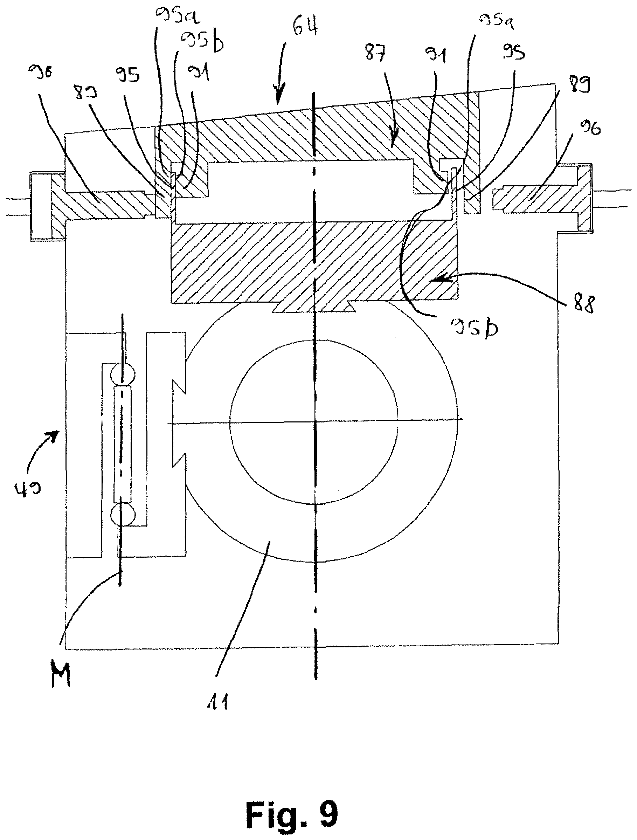

Die Fig. 9 zeigt eine alternative Ausführungsform, bei der statt eines durch Druckluft angetriebenen Kolbens oder Kolbentandems unter Zwischenschaltung eines Kraft-Weg-Wandlers hydraulisch angetriebene Kolben als Aktuatoren eingesetzt werden, die von Haus aus große Kräfte aufbringen und so die Klemmleisten zwischen den Schwenkleisten und den Widerlagern einklemmen.

Ein drittes Ausführungsbeispiel unterscheidet sich von den beiden bislang beschriebenen Ausführungsbeispielen ausschließliech durch das Zusammenspiel seiner Membrane 74 und seines Aktuators in Gestalt des pneumatisch betätigten Kolbens 73 und seines Zylinders 72. Letztere sind auch bei diesem Ausführungsbeispiel so ausgelegt, dass der Kolben die Membrane in eine (zumindest im Wesentlichen) vollständig gestreckte Position drückt, um die Klemmleisten zwischen den Schwenkleisten und den Widerlagern zu klemmen. Anders als bei den anderen Ausführungsbeispielen wird die Membrane zum Zwecke der Freigabe der Klemmleisten nicht nur in ihre entspannte Position zurückgeführt bzw. "entlassen", sondern aktiv vom Kolben gegensinnig verformt, d. h. in eine Position überführt, in der der Abstand der an den Schwenkleisten befestigten Ränder der Membrane relativ zueinander noch kleiner ist als bei entspannter Membrane. Hierdurch können beispielsweise Schwenkleisten, wie die von Fig. 4 gezeigten, in eine Position gezwungen werden, in der sie nach innen, hin zur Mitte der Membrane gebogen sind, sodass sie nicht nur die von Fig. 4 gezeigte entspannte Position einnehmen. Dadurch wird es möglich, den Betrag des Freigangs zu erhöhen, der bei deaktivierter Spindelarretierung zu verzeichnen ist.

Festzuhalten ist, dass für die Unteransprüche jeweils auch für sich allein, ohne die Rückbeziehung auf Anspruch 1 Schutz beansprucht wird. Darüber hinaus ist festzuhalten, dass der derzeitige Anspruch 1 nur ein Formulierungsvorschlag ist, dessen Streichung und Ersetzung durch folgenden Hauptanspruch (ggf. ergänzt durch Merkmale oder Funktionsangaben aus der Beschreibung) vorbehalten ist, auch in Kombination mit einzelnen oder allen Unteransprüchen.

Die manuelle oder (regelmäßig) automatische Steuerung der Wuchtmaschine ist vorzugsweise so ausgelegt, dass nicht an allen Klemmleisten gleichzeitig eine Klemmung hergestellt wird, sondern gezielt nacheinander.

Bei einer Wuchtmaschine, deren Spindelaufhängung 49 Blattfedern 52 verwendet, um die Spindeleinheit unter Zwischenschaltung mindestens eines Sensor 61 schwenkbar am Maschinengestell 1 zu lagern, wird im Normalfall zuerst an denjenigen Klemmleisten die Klemmung hergestellt, die in horizontaler Richtung flexibel bzw. beweglich sind. Denn in dieser Richtung sind die Blattfedern 55 besonders steif, können also die geringen Horizontalkräfte, die im Zuge der Herstellung der Klemmung an den Klemmleisten entstehen, gut abfangen, ohne dass die Messgenauigkeit leidet.

Sobald diese erste Klemmung hergestellt ist, wird die Spindeleinheit in vertikaler Richtung bereits durch die Spindelarretierung stabilisiert bzw. fixiert, sodass nun die Klemmung an denjenigen Klemmleisten hergestellt werden kann, die in vertikaler Richtung flexibel sind. Die dabei aufgrund der elastischen Verformung der Klemmleisten auftretenden Vertikalkräfte werden bereits von den zuerst geklemmten Klemmleisten der Spindelarretierung abgefangen und vermögen daher keinen Ein-fluss auf die Spindelaufhängung 49 bzw. den oder die Sensoren 61 auszuüben.

Die erfindungsgemäße Ausgestaltung der Spindelarretierung erlaubt es, mit einfachen Mitteln zu überwachen, ob die Spindeleinheit während der Unwuchtmessung vollständigen Freigang hat - eine einfache Messung des elektrischen Widerstands zwischen den Klemmleisten und den Schwenkleisten bzw. deren Widerlagern zeigt, ob der erforderliche vollständige Freigang besteht. Zu diesem Zweck werden die Klemmleisten bzw. die Schwenkleisten und/oder die Widerlager derart elektrisch isoliert befestigt und mit Spannung beaufschlagt, dass zwischen ihnen nur dann ein endlicher Widerstand gemessen werden kann, wenn sich ihre Klemmflächen zumindest schwach berühren, mit denen sich die genannten Teile in geklemmtem Zustand aneinander anlegen.

Festzuhalten ist noch, dass die Erfindung äquivalent zum Einsatz gebracht werden kann, falls (selten) durch Materialauftrag am Prüfling ausgewuchtet wird.

### Bezugszeichenliste

1 Maschinenbasis
3 Kammer zur Aufnahme der Spindeleinheit
5 Elektromotor
7 Spindeleinheit
9 Drehachse der Spindel
11 Spindel
13 Kupplungsadapter
15 Aufnahmeöffnung für den auszuwuchtenden Gegenstand
17 Prüfling
19 Betätigungseinrichtung
21 Spannzange
23 Schrauben z. Befestigung des Kupplungsadapters a. d. Spindel
25 erstes Kugellager der Spindel
27 zweites Kugellager der Spindel
29 Spindelhalter
31 Vorspannfedern zum Eliminieren des Lagerspiels der Spindel
33 Federmutter
35 Verbindungsjoch zur Befestigung des Elektromotors
37 entfallen
39 entfallen
41 entfallen
43 entfallen
45 entfallen
47 Riementrieb
49 Spindelaufhängung
51 erstes plattenförmiges Halterelement
53 zweites plattenförmiges Halterelement
55 Blattfeder bzw. Blattfederelement
57 Haltevorsprung für einen Sensor
59 Haltevorsprung für einen Sensor
61 Sensor
63 Auflagekugel z. Koppelung des Sensors an Haltevorsprung
64 Spindelarretierung
65 Materialabtragseinrichtung
66 nicht vergeben
67 erste Klemmbackeneinheit
68 erste Klemmleisteneinheit
69 erste Schwenkleisten
70 erster Haltesteg
71 erster Widerlager
72 Zylinder
73 Kolben
74 Membrane
75 erste Klemmleiste
75a erste Klemmflächen
75b erste Klemmflächen
76 erste Stützleiste
77 zweite Klemmbackeneinheit
78 zweite Klemmleisteneinheit
79 zweite Schwenkleisten
80 zweiter Haltesteg
81 zweite Widerlager
82 nicht vergeben
83 nicht vergeben
84 zweite Membrane
85 zweite Klemmleiste
85a zweite Klemmflächen
85b zweite Klemmflächen
86 zweite Stützleiste
87 zweite Klemmbackeneinheit (drittes Ausführungsbsp.)
88 zweite Klemmleisteneinheit (drittes Ausführungsbsp.)
89 zweite Schwenkleisten (drittes Ausführungsbsp.)
90 Haltesteg (drittes Ausführungsbeispiel)
91 zweite Widerlager (drittes Ausführungsbsp.)
92 nicht vergeben
93 nicht vergeben
94 nicht vergeben
95 zweite Klemmleiste (drittes Ausführungsbeispiel)
95a zweite Klemmfläche (drittes Ausführungsbeispiel)
95b zweite Klemmfläche (drittes Ausführungsbeispiel)
96 Hydraulikkolben
M Messrichtung

## Patentansprüche

1. Auswuchtvorrichtung mit einer Messeinrichtung zur Bestimmung der Rotationsunwucht eines Prüflings umfassend eine Spindeleinheit (7) mit einer Spindel (11), die dazu bestimmt ist, den Prüfling (17) zu halten und mit Prüfdrehzahl rotieren zu lassen, sowie eine Spindelaufhängung (49), mittels derer die Spindeleinheit (7) beweglich an der Maschinenbasis (1) verankert ist, so, dass die Spindeleinheit (7) durch die im Messbetrieb auftretenden Unwuchtkräfte in einer vorgegebenen Messrichtung (M) schwingen kann und mindestens einen Sensor (61), der bei Rotation der Spindel (11) mindestens eine in Messrichtung (M) auftretende Unwuchtkenngröße erfasst und einer Materialabtragseinrichtung (65) zum Auswuchten des Prüflings durch Materialabtrag an einer vorbestimmten Stelle, wobei die Messeinrichtung und die Materialabtragseinrichtung so beschaffen sind, dass der Materialabtrag bei in der Spindel gehaltenem Prüfling erfolgen kann, wobei die Sensoren, sowohl während des Festklemmens der Spindeleinheit (7) als auch während der Materialabnahme am Werkzeughalter außerhalb des Kraftflusses liegen, sodass die während des Festklemmens auftretenden Kräfte die für die Messgenauigkeit mitverantwortlichen Sensoren (61) nicht beeinflussen, **dadurch gekennzeichnet, dass** zusätzlich eine als Klemmvorrichtung ausgestaltete Spindelarretierung (64) vorgesehen ist, mittels derer die Spindeleinheit (7) ohne die Spindelaufhängung (49) oder zumindest ohne den oder die Sensoren (61) mit einer durch das Festsetzen erzeugten Kraft zu belasten, so festgesetzt werden kann, dass sie sich unter dem Einfluss der von der Materialabtragseinrichtung (65) hervorgerufenen Kräfte nicht bewegt, wobei zwei getrennte Klemmsysteme vorgesehen sind, von denen das erste die Spindeleinheit (7) gegen die Einwirkung von Kräften aus einer ersten Richtung festsetzt und das zweite die Spindeleinheit gegen die Einwirkung von Kräften aus einer zweiten, von der ersten Richtung unterschiedlichen Richtung festsetzt, wobei die erste Richtung einer Richtung parallel zur Drehachse (9) der Spindel (11) und die zweite Richtung einer Richtung senkrecht dazu entspricht, wobei beide Richtungen zugleich auch senkrecht zu der Messrichtung (M) der Sensoren (61) oder des Sensors (61) orientiert sind.

2. Auswuchtvorrichtung nach Anspruch 1, **dadurch gekennzeichnet, dass** die Spindelarretierung (64) ausschließlich auf einer Seite am Umfang der Spindeleinheit (7) angreift.

3. Auswuchtvorrichtung nach einem der vorhergehenden Ansprüche, **dadurch gekennzeichnet, dass** die Spindelarretierung (64) Klemmflächen (75a, 75b; 85a, 85b; 95a, 95b) umfasst, auf die mindestens eine öffen- und schließbare Klemmbacke (69, 71; 79, 81; 89, 91) wirkt, wobei die Klemmbacken und/oder die Klemmflächen derart gelenkig oder biegeweich ausgeführt sind, dass die Klemmbacken durch ihre Einwirkung auf die Klemmflächen keine Kraft auf die Spindeleinheit (7) ausüben oder den mindestens einen Sensor (61) belasten.

4. Auswuchtvorrichtung nach Anspruch 3, **dadurch gekennzeichnet, dass** die Klemmflächen (75a, 75b; 85a, 85b; 95a, 95b) als biegeweiche Klemmleisten (75, 85; 95) ausgeführt sind;

5. Auswuchtvorrichtung nach einem der vorhergehenden Ansprüche, **dadurch gekennzeichnet, dass** mindestens zwei Klemmleisten (75, 85; 95) vorhanden sind, die in unterschiedlichen Ebenen angeordnet sind;

6. Auswuchtvorrichtung nach einem der vorhergehenden Ansprüche, **dadurch gekennzeichnet, dass** mindestens zwei Klemmleisten (75 oder 85 bzw. 95) vorgesehen sind, die parallel und mit Abstand zueinander angeordnet sind;

7. Auswuchtvorrichtung nach Anspruch 3 oder 4, **dadurch gekennzeichnet, dass** die Klemmbacken jeweils eine Schwenkleiste (69, 79; 89) umfassen, die einen elastisch verformbaren Haltesteg (70; 80; 90) aufweist, um den die Schwenkleiste im Zuge der Betätigung des Klemmbackens (69, 71; 79, 91; 87, 91) gegen die Klemmleiste geschwenkt wird;

8. Auswuchtvorrichtung nach einem der vorhergehenden Ansprüche, **dadurch gekennzeichnet, dass** mindestens zwei Klemmbacken (69, 71; 79, 81; 89, 91) von einem gemeinsamen Aktuator (72, 73) betätigt werden;

9. Auswuchtvorrichtung nach Anspruch 8, **dadurch gekennzeichnet, dass** der Aktuator (72, 73) die mindestens eine ihm zugeordnete Schwenkleiste (69; 79) unter Zwischenschaltung eines Kraft-Weg-Wandlers (74, 84) betätigt, der die vom Aktuator in einer ersten Wirkrichtung aufgebrachte Betätigungskraft in eine zweite, andere, vorzugsweise annähernd dazu senkrechte Wirkrichtung umlenkt, bevor er sie der Schwenkleiste mitteilt und dabei zugleich die vom Aktuator entlang eines längeren Weges aufgebrachte kleinere Kraft in eine entlang eines kürzeren Weges wirkende größere Kraft umwandelt.

## Claims

1. Balancing device having a measuring device for determining rotational imbalance of a test piece, comprising a spindle unit (7) with a spindle (11), which is intended to hold the test piece (17) and to allow the test piece to rotate at a testing speed, and a spindle suspension (49), by means of which the spindle unit (7) is movably anchored to the machine base (1), so that the spindle unit (7) is able to oscillate in a predefined measurement direction (M) as a result of the imbalance forces occurring during the measurement operation, and at least one sensor (61) which, during rotation of the spindle (11), detects at least one imbalance characteristic variable occurring in the measurement direction (M), and a material removal device (65) for balancing the test piece by material removal at a predetermined point, wherein the measuring device and the material removal device are designed such that the material removal can be carried out with the test piece held in the spindle, and wherein the sensors are located on the tool holder outside the force flow, both during the clamping of the spindle unit (7) and also during the material removal, so that the forces occurring during the clamping do not influence the sensors (61) jointly responsible for the measurement accuracy,
**characterized in that**, in addition, a spindle lock (64) configured as a clamping device is provided, by means of which the spindle unit (7) can be fixed without loading the spindle suspension (49) or at least without loading a sensor or the sensors (61) with a force produced by the fixing, such that the spindle suspension does not move under the influence of the forces caused by the material removal device (65), wherein two separate clamping systems are provided, of which the first fixes the suspension unit (7) against the action of of forces from a first direction, and the second fixes the suspension unit against the action forces from a second direction, different from the first direction, wherein the first direction corresponds to a direction parallel to the axis of rotation (9) of the spindle (11), and the second direction corresponds to a direction perpendicular thereto, wherein both directions are at the same time also oriented perpendicular to the measurement direction (M) of the sensors (61) or of the sensor (61).

2. Balancing device according to Claim 1, **characterized in that** the spindle lock (64) acts exclusively on one side on the circumference of the spindle unit (7) .

3. Balancing device according to one of the preceding claims, **characterized in that** the spindle lock (64) comprises clamping surfaces (75a, 75b; 85a, 85b; 95a, 95b), on which at least one clamping jaw (69, 71; 79, 81; 89, 91) that can be opened and closed acts, wherein the clamping jaws and/or the clamping surfaces are designed to be articulated or flexible such that the clamping jaws exert no force on the spindle unit (7) or the at least one sensor (61) as a result of their action on the clamping surfaces.

4. Balancing device according to Claim 3, **characterized in that** the clamping surfaces (75a, 75b; 85a, 85b; 95a, 95b) are designed as flexible clamping strips (75, 85; 95).

5. Balancing device according to one of the preceding claims, **characterized in that** there are at least two clamping strips (75, 85; 95), which are arranged in different planes.

6. Balancing device according to one of the preceding claims, **characterized in that** at least two clamping strips (75 or 85 and/or 95) are provided, which are arranged parallel to and at a distance from one another.

7. Balancing device according to Claim 3 or 4, **characterized in that** the clamping jaws each comprise one pivoting strip (69, 79; 89), which has an elastically deformable holding web (70; 80; 90), around which the pivoting strip is pivoted against the clamping strip in the course of the actuation of the clamping jaw (69, 71; 79, 81; 87, 91).

8. Balancing device according to one of the preceding claims, **characterized in that** the at least two clamping jaws (69, 71; 79, 81; 89, 91) are actuated by a common actuator (72, 73).

9. Balancing device according to Claim 8, **characterized in that** the actuator (72, 73) actuates the at least one pivoting strip (69; 79) assigned thereto with the interposition of a force-displacement converter (74, 84), which deflects the actuating force applied by the actuator in a first direction of action into a second, different direction of action, preferably approximately perpendicular thereto, before imparting it to the pivoting strip, and at the same time converts the small force applied by the actuator along a longer travel into a greater force acting along a shorter travel.

## Revendications

1. Arrangement d'équilibrage comprenant un dispositif de mesure destiné à déterminer le balourd de rotation d'une éprouvette, comprenant une unité à broche (7) pourvue d'une broche (11) qui est conçue pour maintenir l'éprouvette (17) et la laisser tourner à une vitesse de rotation d'épreuve, ainsi qu'une suspension de broche (49) au moyen de laquelle l'unité à broche (7) est ancrée avec mobilité à la base de la machine (1), de sorte que l'unité à broche (7) peut osciller dans une direction de mesure (M) prédéfinie sous l'effet des forces de déséquilibre produites en régime de mesure, et au moins un capteur (61) qui, lors de la rotation de la broche (11), détecte au moins une grandeur caractéristique de déséquilibre qui se produit dans la direction de mesure (M) et un dispositif d'enlèvement de matière (65) destiné à équilibrer l'éprouvette par enlèvement de matière à un endroit prédéterminé, le dispositif de mesure et le dispositif d'enlèvement de matière étant réalisés de telle sorte que l'enlèvement de matière peut avoir lieu avec l'éprouvette maintenue dans la broche, les capteurs se trouvant en-dehors du flux de force à la fois pendant le serrage de l'unité à broche (7) et pendant l'enlèvement de matière au niveau du porte-outil, de sorte que les forces qui se produisent pendant le serrage n'influencent pas les capteurs (61) co-responsables de la précision de mesure, **caractérisé en ce qu'**un système de blocage de broche (64) configuré sous la forme d'un arrangement de serrage est en plus présent, au moyen duquel l'unité à broche (7) peut être calée sans charger la suspension de broche (49) ou au moins sans charger le ou les capteurs (61) avec une force générée par le calage, de sorte qu'elle ne bouge pas sous l'influence des forces provoquées par le dispositif d'enlèvement de matière (65), deux systèmes de serrage séparés étant prévus, dont le premier cale l'unité à broche (7) contre l'effet des forces provenant d'une première direction et le deuxième cale l'unité à broche contre l'effet des forces provenant d'une deuxième direction, différente de la première direction, la première direction correspondant à une direction parallèle à l'axe de rotation (9) de la broche (11) et la deuxième direction correspondant à une direction perpendiculaire à celle-ci, les deux directions étant en même temps aussi orientées perpendiculairement à la direction de mesure (M) des capteurs (61) ou du capteur (61) .

2. Arrangement d'équilibrage selon la revendication 1, **caractérisé en ce que** le système de blocage de broche (64) est appliqué exclusivement sur un côté sur le pourtour de l'unité à broche (7).

3. Arrangement d'équilibrage selon l'une des revendications précédentes, **caractérisé en ce que** le système de blocage de broche (64) comporte des surfaces de serrage (75a, 75b ; 85a, 85b ; 95a, 95b) sur lesquelles agit au moins une mâchoire de serrage (69, 71 ; 79, 81 ; 89, 91) qui peut être ouverte et fermée, les mâchoires de serrage et/ou les surfaces de serrage étant réalisées articulées ou flexibles de sorte que les mâchoires de serrage, par leur action sur les surfaces de serrage, n'exercent aucune force sur l'unité à broche (7) ou chargent l'au moins un capteur (61).

4. Arrangement d'équilibrage selon la revendication 3, **caractérisé en ce que** les surfaces de serrage (75a, 75b ; 85a, 85b ; 95a, 95b) sont réalisées sous la forme de baguettes de serrage flexibles (75, 85 ; 95) .

5. Arrangement d'équilibrage selon l'une des revendications précédentes, **caractérisé en ce qu'**au moins deux baguettes de serrage (75, 85 ; 95) sont présentes, lesquelles sont disposées dans des plans différents.

6. Arrangement d'équilibrage selon l'une des revendications précédentes, **caractérisé en ce qu'**au moins deux baguettes de serrage (75, 85 ; 95) sont présentes, lesquelles sont disposées en parallèle et espacées l'une de l'autre.

7. Arrangement d'équilibrage selon la revendication 3 ou 4, **caractérisé en ce que** les mâchoires de serrage comportent respectivement une baguette pivotante (69, 79 ; 89) qui possède un élément jointif de maintien (70 ; 80 ; 90) déformable élastiquement autour duquel la baguette pivotante est pivotée dans le cadre de l'actionnement de la mâchoire de serrage (69, 71 ; 79, 81 ; 87, 91) contre la baguette de serrage.

8. Arrangement d'équilibrage selon l'une des revendications précédentes, **caractérisé en ce qu'**au moins deux mâchoires de serrage (69, 71 ; 79, 81 ; 89, 91) sont actionnées par un actionneur (72, 73) commun.

9. Arrangement d'équilibrage selon la revendication 8, **caractérisé en ce que** l'actionneur (72, 73) actionne l'au moins une baguette pivotante (69 ; 79) qui lui est associée en intercalant un convertisseur force/course (74, 84) qui dévie la force d'actionnement appliquée par l'actionneur dans une première direction d'action dans une deuxième autre direction d'action, de préférence approximativement perpendiculaire à celle-ci, avant de la communique à la baguette pivotante et de convertir ici en même temps la force plus faible, appliquée par l'actionneur le long d'une course plus longue, en une force plus élevée agissant le long d'une course plus courte.
